# EUROPEAN PATENT APPLICATION

(11) **EP 3 824 709 A1**
(43) Date of publication of application: **26.05.2021**
(21) Application number: 20208374.7
(22) Date of filing: 18.11.2020
(51) Int. Cl.: A01C 1/04

(54) **DEVICE FOR TRANSPORTING SEEDS AND FOR POSITIONING SEEDS IN THE GROUND**

(30) Priority: 19.11.2019 IT 201900021630
(71) Applicant: Rotas Italia S.r.l., 31100 Treviso (IT)
(72) Inventor: CELANTE, Francesco, 31100 Treviso (IT)
(74) Representative: Marri, Luca

(57) **Abstract**

Device (1) for transporting seeds and for positioning seeds in the ground, comprising a support layer (2) having at least one portion (6) coated with an adhesive layer (8) and a plurality of seeds (10) glued to the adhesive layer (8). The support layer (2) is made of a material which is biocompatible or inert with respect to the ground and is suitable for direct positioning in the ground.

## Description

The present invention relates to the technical field of gardening and cultivation of plants and in particular relates to a device for transporting seeds and positioning them in the ground.

In the present invention, the term "seed" is understood as meaning the natural element from which a plant is produced and developed, while the term "ground" is understood as meaning the environment with a specific composition which allows germination of the seed.

In the gardening field, seeds are generally sold packaged in containers with a predetermined form and size. For example, the containers may comprise sacks, bags, boxes or other similar devices.

The use of these containers ensures that the intact condition and particular properties of the seeds are preserved until the seeds are sown and distributed in the ground.

Distribution of the seeds is performed by a user who shakes the open container in the area of the ground where the seeds are to be sown or removes the seeds from the container and distributes them on the ground by means of a suitable instrument.

In this connection, the containers may comprise means for dosing and conveying the seeds while they are being distributed on the ground.

The layout or pattern for distribution of the seeds in the ground is chosen personally by the user so as to obtain the desired positioning of the plants which will be grown from the seeds.

One drawback of these solutions consists in the fact that the distribution of the seeds in the ground requires particular skill and experience on the part of the user.

A further drawback consists in the fact that, even for the expert user, it is particularly difficult and laborious to distribute the seeds in the ground according to predefined layouts or patterns.

Another drawback consists in the fact that, following removal from the container, it is particularly difficult to distinguish between the seeds and identify them, in particular in the case of a non-expert user.

Therefore this latter drawback results in the risk of the user distributing seeds of a particular type of plant in a wrong area of the ground.

Another drawback consists in the fact that, after the distribution step, it is difficult to check the correct distribution of various types of different seeds in different areas of the ground.

US3098320, WO2010/069067 and US2013/269248 describe known devices for transporting and positioning seeds in the ground, comprising at least one support layer with an adhesive layer on which the seeds are glued.

However, these devices have at least the drawback of not having components suitable for being glued onto an external support in order to allow identification of the seeds.

The main object of the present invention is to provide a device for transporting seeds and for positioning seeds in the ground which is able to overcome the aforementioned drawbacks.

A particular task of the present invention is to provide a device of the aforementioned type which allows the positioning, in a simple manner, of the seeds in the ground according to predefined layouts and patterns.

Another task of the present invention is to provide a device of the type described above, which allows the immediate identification of different types of seeds.

A further task of the present invention is to provide a device of the type described above which allows immediate verification of the desired position of the seeds in different areas of the ground.

Another task of the present invention is to provide a device of the type described above which allows the seeds to remain undamaged during transportation until they are positioned in the ground.

A further task of the present invention is to provide a device of the type described above which is at least partially biodegradable or in any case inert with respect to the ground.

The main object and the tasks described above are achieved with a device for transporting and for positioning seeds in the ground according to Claim 1.

In order to illustrate more clearly the innovative principles of the present invention and its advantages compared to the prior art, an example of embodiment of the device for transporting and for positioning seeds in the ground will be described below with the aid of the accompanying drawings. In the drawings:
- Figure 1 shows a perspective and schematic view of a first embodiment of the device for transporting and for positioning seeds according to the present invention;
- Figure 2 shows a cross-sectioned front view of a second embodiment of the device for transporting and for positioning seeds, with the seeds shown in schematic form;
- Figure 3a shows a top plan view of a third embodiment of the device according to the present invention in an extended configuration;
- Figure 3b shows a perspective view of the device of Figure 3a in a folded configuration. With reference to the Figures, the present invention relates to a device for transporting seeds and for positioning them in the ground, denoted overall by the reference number 1.

In a preferred embodiment, the device 1 has a support layer 2 comprising at least one portion 6 coated with an adhesive layer 8 and a plurality of seeds 10 glued to the adhesive layer 8.

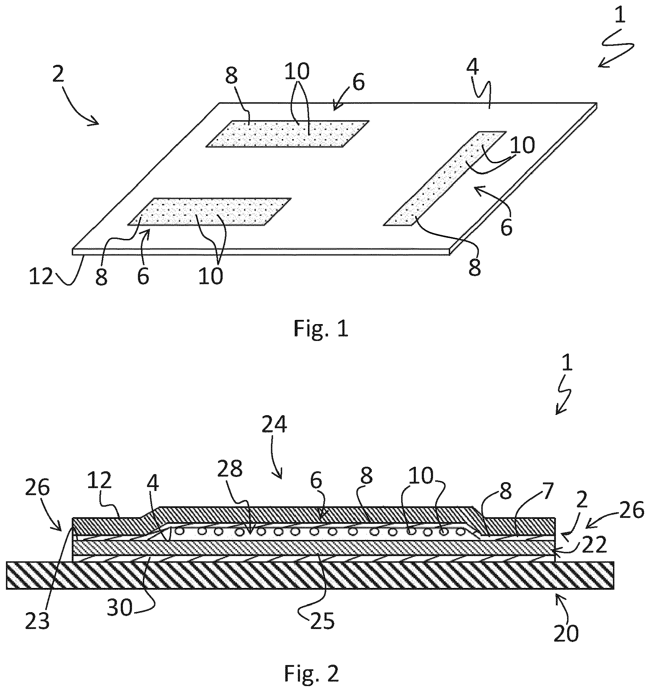

As shown in Figure 1, the device 1 may be formed solely by the support layer 2, and the portion 6 with the adhesive layer 8 is formed on a surface 4 of the support layer 2.

Advantageously, the support layer 2 with the seeds 10 glued to the adhesive layer 8 is suitable for direct positioning in the ground. In particular, the support layer 2 is intended to be positioned and buried directly in the ground, preferably with the adhesive layer 8 and the seeds 10 directed upwards.

In this respect, the support layer 2 may be positioned in the ground in the horizontal position, namely parallel to the ground, or in a vertical or inclined position.

In this way, the support layer 2 acts directly as a support base for the germination and growth of the plants.

The material of the support layer 2 may be a material which is inert with respect to the ground or a biodegradable material, so as to make the support layer 2 suitable for direct positioning in the ground, as indicated above.

In the text of the present invention the term "inert" is understood as meaning a material which does not interact with the ground and does not release substances able to alter negatively the composition of the ground, for example triggering undesirable chemical reactions.

If the material of the support layer 2 is inert with respect to the ground it may be chosen from the group of polymeric materials such as polyethylene or polyvinylchloride or polyester or other similar materials.

Alternatively, if the material of the support layer 2 is biodegradable it may be chosen from the group comprising natural paper, material recovered from the processing of plant material or plastic film.

Moreover, the material of the support layer 2 may be a semi-rigid material. In the text of the present invention, the term "semi-rigid" is understood as meaning a material which maintains an at least partial flexibility.

The adhesive also, in a manner similar to the material of the support layer 2, is chosen so as not to alter the composition and the properties of the ground and therefore may be inert or biodegradable.

Advantageously, the support layer 2 may also comprise a plurality of holes, not shown in the figures, which are distributed over the surface 4 of the layer and are designed to allow the roots to pass through following growth of the plants.

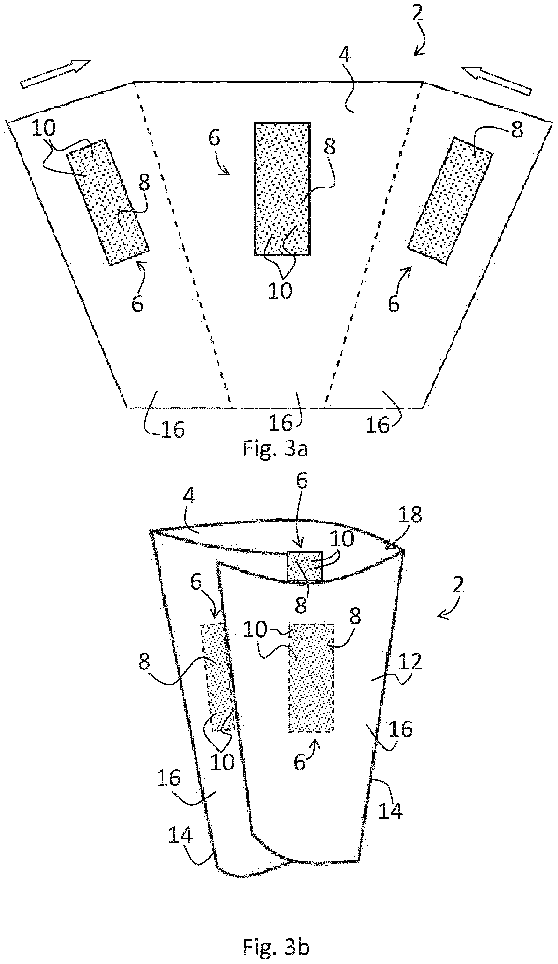

As shown more clearly in Figures 1 and 3a, the device 1 according to the present invention may comprise a plurality of portions 6 with respective adhesive layers 8 having seeds 10 glued thereon and arranged in a predetermined pattern.

In the embodiments shown in the Figures, the portions 6 with the seeds 10 have a uniform distribution in the support layer 2 and forms and dimensions which are identical to each other.

However, these portions 6 may also be positioned differently and may have forms and dimensions which are different from each other, without thereby departing from the scope of protection of the present invention.

The manufacturer of the device 1 may therefore select beforehand the positioning of the portions 6 with the adhesive layer 8 on the support layer 2 as well as the form and dimensions of these portions 6.

In this way, considering that the device 1 is subsequently positioned in the ground, the manufacturer may establish in advance the predefined layout or pattern for positioning the seeds 10 in the ground depending on the requirements of the end user.

Advantageously, different portions 6 of adhesive layers 8 may comprise seeds 10 of different types; furthermore, the seeds 10 may be glued onto different portions 6 with densities which vary between portions.

According to an alternative embodiment, not shown in the Figures, the adhesive layer 8 on which the seeds 10 are glued may be distributed over the entire surface 4 of the support layer 2.

Therefore, in this embodiment, the at least one portion 6 with the adhesive layer 8 corresponds to the entire surface 4 of the support layer 2.

In accordance with an embodiment, not shown in the figures, the surface 12 of the support layer 2 opposite the surface 4 on which the adhesive layers 8 with the seeds 10 are positioned may comprise at least one piece of information, not shown in the figures, relating to the seeds 10 and/or the positioning of the seeds 10 in the ground.

For example, the information may allow the identification of the seeds 10 which are glued to the support layer 2 during transportation of the device 1 and before they are positioned in the ground.

The information may consist of a series of instructions or a series of explanations obtained by ink-printing the surface 12 of the support layer 2; the printing inks must also be inert with respect to the ground or at least biocompatible, in the same way as the material of the support layer 2 and the adhesive.

As shown in Figures 3a-3b, the support layer 2 comprises one or more folding or crease lines 14 which are designed to define respective areas 16 of the support layer 2.

It should be noted that the shaped profile of the support layer 2 shown in Figures 3a-3b is shown only by way of a non-limiting example of the scope of protection of the present invention.

The folding lines 14 allow the support layer 2 to be folded onto itself (in the direction of the arrows shown in Figure 3a) so as to form a central cavity 18 in the folded configuration, as shown in Figure 3b.

In this folded configuration, the portions 6 with the adhesive layers 8 and the seeds 10 glued thereon are directed towards the cavity 18.

The support layer 2 thus folded is positioned directly in the ground and allows the intrinsic moisture of the ground to be collected inside the cavity 18; in this way the germination and growth of the seeds 10 is favoured.

Moreover, each area 16 defined by the folding lines 14 may comprise one or more portions 6 with the adhesive layers 8 having the seeds 10 glued thereon.

According to a further embodiment of the invention, the device 1 may comprise a protective layer 20 made preferably of siliconized material.

The protective layer 20 is glued to the support layer 2 along a portion 7 of adhesive layer 8 without seeds 10 and separate from the portion 6 with seeds 10.

In this embodiment, the seeds 10 are glued to one or more portions 6 of adhesive layer 8 of the support layer 2 and are positioned between the support layer 2 and the protective layer 20. Moreover, the portion 7 of adhesive layer 8 is positioned preferably in a peripheral position with respect to the portion 6 of adhesive layer 8 with seeds 10.

The protective layer 20, since it is glued to the surface 4 of the support layer 4 on which the seeds 10 are glued, is able to ensure that the seeds 10 remain undamaged during transportation of the device 1 and until the seeds 10 are positioned in the ground.

Therefore, in this embodiment, the support layer 2, before being positioned in the ground, must be separated from the protective layer 20 so as to expose the seeds 10 which are glued to the portions 6 of adhesive layer 8.

In a further embodiment, the device 1 according to the present invention may comprise a backing layer 22 glued to the support layer 2 on the surface 4 with the glued seeds 10 and along at least one portion 7 of adhesive layer 8 without seeds.

The support layer 2, before being positioned in the ground, must therefore be separated from the backing layer 22. In this respect, the support layer 2 may comprise one or more tongues, not shown in the figures, for facilitating separation from the backing layer 22.

The embodiment of the device for transporting and positioning seeds shown in Figure 2 comprises both the protective layer 20 and the backing layer 22.

Alternatively, the device 1 for transporting and positioning seeds may comprise only the protective layer 20 or only the backing layer 22 in combination with the support layer 2. In all these embodiments, the support layer 2 forms, in combination with the protective layer 20 and/or with the backing layer 22 a multi-layer structure.

In the embodiment shown in Figure 2, the protective layer 20 is not glued directly to the support layer 2 as described above. However, the protective layer 20 may also be glued both to the backing layer 22 and to the support layer 2, as described below.

In a manner similar to that described above, the seeds 10 are positioned between the support layer 2 and the backing layer 22.

The support layer 2 comprises a central zone 24 and a peripheral zone 26.

In particular, the central zone 24 of the support layer 2 comprises the seeds 10 glued to the portion 6 of adhesive layer 8, while the peripheral zone 26 of the support layer 2 is glued to the backing layer 22 along the portion 7 of adhesive layer 8 without seeds.

The support layer 2 is folded between the central zone 24 and the peripheral zone 26 so as to form a housing 28 between the support layer 2 and the backing layer 22, designed to house the seeds 10 which are glued to the adhesive layer 8.

Advantageously, the backing layer 22 comprises a respective adhesive layer 30 which is positioned on the surface 25 of the backing layer 22 opposite the surface 23 glued to the support layer 2.

In the embodiment shown in Figure 2, this adhesive layer 30 is glued to the protective layer 20.

Moreover, the protective layer 20 may be glued both to the backing layer 22 by means of the adhesive layer 30 and to the support layer 2 by means of the portion 7 of adhesive layer 8.

The backing layer 22 may also be glued to an external support, not shown in the Figures, by means of the adhesive layer 30, for example after the protective layer 20 has been removed.

The backing layer 22 may be glued to the external support before the support layer 2 has been removed. In this case, gluing of the backing layer 22 to the external support facilitates the separation of the support layer 2 from the backing layer 22.

Moreover, the adhesive layer 30 of the backing layer 22 may be washed so as to facilitate removal thereof from the support.

The surface 23 of the backing layer 22 which initially is glued to the support layer 2 and which remains free after separation from the latter may have at least one piece of information relating to the seeds 10 or their positioning in the ground.

In a manner similar to that described above, the information may consist of a set of instructions or a series of explanations which are formed by means of ink-printing of the backing layer 22.

The information printed on the backing layer 22 may allow the seeds 10 to be identified after the backing layer 22 has been glued to the support and after the support layer 2 has been positioned in the ground.

In accordance with a further embodiment of the invention, the support layer 2 may be positioned and buried in the ground together with the backing layer 22, after the latter has been separated from the protective layer 20.

In this embodiment, at least one of the support layer 2 and the backing layer 22 must be made of a material which is designed to decompose spontaneously in the ground so as to expose the seeds 10 positioned between the two layers.

Advantageously, the aforementioned layers may comprise nutritional substances for the plants or fertilizers or other similar substances intended to be released into the ground from the layers.

Alternatively, further intermediate layers, not shown in the figures, may be provided, these being arranged between the aforementioned layers and comprising the substances to be released in the ground.

From the above description it is now clear how the device for transporting and positioning seeds is able to achieve advantageously the predefined objects.

In particular, it is clear how by providing one or more portions with respective adhesive layers having the glued seeds it is possible to obtain predefined different layouts or patterns for positioning the seeds in the ground after positioning of the support layer in the ground.

Moreover, the provision of the information on the support layer and/or on the backing layer allows immediate identification of the seeds and checking of the correct positioning of the seeds in the desired areas of the ground.

Obviously the description given above of embodiments applying the innovative principles of the present invention is provided by way of example of these innovative principles and must therefore not be regarded as limiting the scope of the rights claimed herein.

In particular, the characteristic features of the various solutions shown here may be combined with each other according to specific needs and wishes, as may be easily imagined by the person skilled in the art.

## Claims

1. Device (1) for transporting seeds and for positioning seeds in the ground, comprising:
- a support layer (2) comprising at least one portion (6) coated with an adhesive layer (8);
- a plurality of seeds (10) glued to said adhesive layer (8);
wherein said support layer (2) is made of a material which is biocompatible or inert with respect to the ground and is suitable for direct positioning in the ground.

2. Device (1) according to Claim 1, **characterized in that** said support layer (2) comprises a plurality of portions (6) which are coated with respective adhesive layers (8) and arranged in a predetermined pattern.

3. Device (1) according to Claim 1, **characterized in that** the surface (12) of said support layer (2) opposite to the surface (4) with said at least one portion (6) of adhesive layer (8) comprises at least one piece of information relating to the seeds (10) and/or positioning of the seeds (10) in the ground.

4. Device (1) according to Claim 1, **characterized in that** said support layer (2) comprises one or more folding or crease lines (14) designed to define respective areas (16) of the support layer (2).

5. Device (1) according to Claim 4, **characterized in that** said support layer (2) is designed to be folded along said folding or crease lines (14) so as to form a cavity (18) in the folded configuration, said at least one portion (6) with the adhesive layer (8) and the glued seeds (10) being directed towards said cavity (18) in said folded configuration.

6. Device (1) according to Claim 1, **characterized in that** the material of said support layer (2) is chosen from the group comprising natural paper, material recovered from the processing of plant material or biodegradable plastic film.

7. Device (1) according to Claim 1, **characterized in that** it comprises a protective layer (20) glued to said support layer (2) along at least one portion (7) of adhesive layer (8) without seeds (10), the seeds (10) being positioned between said support layer (2) and said protective layer (20).

8. Device (1) according to Claim 1, **characterized in that** it comprises a backing layer (22) glued to said support layer (2) along at least one portion (7) of adhesive layer (8) without seeds (10), the seeds (10) being positioned between said support layer (2) and said backing layer (22).

9. Device according to Claim 8, **characterized in that** said backing layer (22) comprises a respective adhesive layer (30) positioned on the surface (25) of the backing layer (22) opposite the surface (23) glued to the support layer (2).

10. Device according to Claim 9, **characterized in that** the surface (23) of said backing layer (22) glued to said support layer (2) comprises at least one piece of information relating to the seeds (10) and/or the positioning of the seeds (10) in the ground.

11. Device according to Claim 8, **characterized in that** said support layer (2) comprises a central zone (24) and a peripheral zone (26), the support layer (2) being folded between the central zone (24) and the peripheral zone (26) so as to form a housing (28) between the support layer (2) and the backing layer (22) designed to house the seeds (10) which are glued to the adhesive layer (8).
